# EUROPEAN PATENT APPLICATION

(11) **EP 3 671 585 A1**
(43) Date of publication of application: **24.06.2020**
(21) Application number: 18213269.6
(22) Date of filing: 18.12.2018
(51) Int. Cl.: G06Q 10/06

(54) **LEARNING APPARATUS AND AN ASSISTANCE APPARATUS FOR GENERATING A LIST OF PRIORITIZED INTERACTIONS**

(71) Applicant: Siemens Aktiengesellschaft, 80333 München (DE)
(72) Inventor: Schmid, Klaus Arthur, 81541 München (DE); Sutor, Ariane, 82166 Gräfelfing (DE); Zechel, Markus, 83278 Traunstein (DE)

(57) **Abstract**

Assistance apparatus for generating a list of prioritized interactions to apply to a technical system, comprising a memory storing computer-readable instructions; and one or more processors configured as a learning apparatus (21), a resource input unit (22), a ranking unit (23) and a user interface unit (24) to execute the computer-readable instructions such that the one or more processors are configured to
- create actual resource data records of considered resources and interactions, each data record comprising of several resource conditions of one resource and an interaction by the resource input unit (22), the interactions and resource conditions received from at least one data repository (30),
- generate a prioritized interaction list by
- determining, by a machine learning model of the learning apparatus (21), an actual score value for each considered combination of resource and interaction based on the actual resource data records, and
- ranking, by a ranking unit (23), the combinations of resource and interaction into an actual sequence according to the actual score values for each combination,

- output the prioritized interaction list by a user interface unit (24) for selecting at least one combination of resource and interaction to apply in the technical system.

## Description

This application is related to a learning apparatus for providing a machine learning model to an assistance apparatus and an assistance apparatus for generating a list of prioritized interactions, which are applied to a technical system.

Various interactions are required to ensure direct and indirect resources being delivered in an adequate quality and at the right time to operate a technical system. Thereby the cost shall be minimized.

Direct resources are, e.g., devices, controllers, monitoring or diagnostic server, which are components of the technical system or production material like steel, melting powder and many more, which are required to manufacture a product by the technical system. Indirect resources are, e.g., suppliers, which offer and provide these goods.

Further requirements on direct resources relate, e.g., to quality, availability and price. Also, indirect resources like suppliers need to be qualified, evaluated and developed to comply to various requirements. Requirements have to be complied with in respect to political, ethical and legal conditions. Legal requirements exist, e.g. with respect to devices used in safety critical environment, which require an official certification before they can be implemented and applied in a system. Political requirements exist, e.g. with respect to limitations to import specific goods itself or to import from suppliers located in countries banned with import restrictions. The risk of wrong, delayed or unqualified delivery has to be minimized.

Therefore, several interactions have to be performed, a few of them are qualification of a resource, evaluation of a resource or development of a resource.

Normally not all possible interactions can be performed at the same time. In fact, a resource manager has to prioritize valid and important interactions in an appropriate and meaningful way. Such a prioritization has to fulfil a multitude of different criteria. Usually a human person is not able to consider simultaneously all the different criteria.

Concerning the State of the Art reference is made to WO 2018/095547 A1, WO 2018/028803 A1 and WO 2018/028783 A1.

Therefore, it is the object of the present invention to provide an assistance apparatus, which supports a resource manager in prioritizing interactions related to a resource to be supplied to a technical system taking into account previous interactions and at least the most relevant conditions regarding the resources to be managed.

The object is solved by the features of the independent claims. The dependent claims contain further developments of the inventions.

According to a first aspect, the invention refers to a learning apparatus for providing a machine learning model to an assistance apparatus for generating a list of prioritized interactions to apply to a technical system, comprising a memory storing computer-readable instructions, and one or more processors configured as a control unit, a first input unit and an output unit to execute the computer-readable instructions such that the one or more processors are configured to
- generate, by the first input unit, training data comprising training data records for at least one combination of a resource and an interaction out of a number of available resources and available interactions, a training data record comprising of several resource conditions for the resource and an interaction, and an initial score value assigned to each training data record,
- train a machine learning model to evaluate a score for each combination of resource and interaction using the received training data records and a score value assigned to each training data record in the control unit,
- determine by the trained machine learning model a score value for each combination of resource and interaction based on the training data records, and
- provide for each combination of resource and interaction the determined score value to the assistance apparatus via the output unit.

A combination of interaction and resource represents an interaction performed on the resource or an interaction which is related to a resource. The resource is thereby described more detailed by resource conditions, which further characterize the resource. For a resource being a certain supplier, resource conditions could be name, location, offered products and furthermore. Interactions are for example measures like qualify, develop, evaluate.

By assigning a score value out of a predefined value range to each combination, a measure of importance can be assigned to each dedicated interaction performed to a dedicated resource. Based on this training data, a machine learning model can be trained to provide a score value to a combination of resource and interaction, especially for a resource having a dedicate set of resource conditions. The machine learning model takes for the considered interaction each resource condition into account and relates it to the assigned score. The prioritization by determining a score considers a multitude of technical aspects as well as potential risks inherently.

The resulting machine learning model provides a scoring algorithm to calculate a score wherein the higher the score the more prioritized the combination of the resource and interaction is evaluated.

It is essential that the initial score values are generated by a scoring unit based on expert knowledge. Therefore, previous interactions are evaluated by experts and provided with a score value according to the importance of the interaction depending on the underlying resource condition.

In a preferred embodiment for each type of interaction a separate instance of machine learning model is trained by training data comprising only combinations of the respective type of interactions and a resource.

This provides a more specific machine learning model with respect to the resource conditions having major impact.

In a preferred embodiment the one or more processors of the learning apparatus are configured to determine a training score value for each combination of resource and interaction based on the training resource data records and provide the determined training resource value for each combination of resource and interaction to the assistance apparatus via the output unit.

The determined training score value can already be used for a first prioritized interaction list and represents an already valuable result, because the training data was labelled by expert input regarding a hypothesis ranking. Therefore, the machine learning model resulting from the training using the training data records reflects these expert hypotheses ranking.

According to a further preferred embodiment the one or more processors are configured to receive actual resource data records of considered resources and interactions via a second input unit from the assistance apparatus and determine an actual score value for each combination of resource and interaction based on the actual resource data records.

Actual resource data records are input to the machine learning model and actual score values for each combination of resources and interactions are evaluated and output to the assistance apparatus. Actual resource data records may include a set of combinations of interactions and resources. Such a resource can be an already known or a new resource, wherein a known resource was part and a new resource was not part of the training data records. Resource conditions of known resources may differ from those resource conditions included in training data records. The learning apparatus determines based on the trained machine learning model an actual score value for each actual resource data record. The score provides a measure for the importance of the combination the data record includes. The determined score value is based on the knowledge of the training data records and assigned scores and therefore considers all the resource conditions.

According to a further preferred embodiment the one or more processors of the learning apparatus are configured to receive an updated sequence of combinations via a feedback unit and to generate updated training data by assigning the actual score value to the data records according to the updated sequence and re-train the machine learning model using the updated training data as additional input.

This means the machine learning model is iteratively re-trained and improved. This is especially necessary, because the initial training data is based only on hypothesis score values of domain experts and a ranking of the combinations can only be calculated by the score value. A user interaction, e.g. a selection of a certain combination, especially a combination not ranked as highest combination, does not generate an explicit new score value, but a partial new order, i.e. an updated sequence of combinations. Only by assigning the actual score value to the updated sequence the data records receive a new score. With this new assignment of combinations and score values the model is retrained and optimized. The updated sequence of combinations and the assigned actual score values reflect the selection behavior of the user in an improved form compared to the previous iteration.

According to a further preferred embodiment only the combinations of the prioritized interaction list having different rank in the updated sequence compared to the actual sequence are used as updated training data.

By only using the combinations having different rank in the updated sequence compared to the actual sequence for further training, the machine learning model provides these combinations with a high weight. This means the re-trained machine learning model is heavily influenced by this new updated training data.

According to a further preferred embodiment all combinations of a prioritized interaction list assigned with score values according to the updated sequence are used as updated training data.

By using all combinations of the prioritized action list as updated training data, wherein only one of few of the combinations are changed in the ranking, the re-ranked combinations have a far lower influence on the machine learning model. That means, the influence of the re-ranked combinations is much lower than in the before described case when only these re-ranked combinations and the assigned score according to the actual score are used only as new training data.

According to a further preferred embodiment the machine learning model is based on a regression function, especially on a pointwise partial least square regression function.

A regression function provides supervised learning and reproduces assimilated regularities or similarities in a provided data record. Usually a number of observations of user interactions are used to train a model especially a pointwise regression model of the underlying decision process. The combination with the highest probability to be chosen will be ranked first. This is used often in personalization algorithms for shops. In this usual application scenarios there are previous interaction data that can be used for training a machine learning model. Retraining the regression function by re-ordered combinations based on the usual interaction improves the regression function by reassigning new weight associations to the combination and the model can be recalculated.

According a second aspect of the present invention an assistance apparatus for generating a list of prioritized interactions to apply to a technical system comprises a memory storing computer-readable instructions and one or more processes configured as a learning apparatus as described before, a resource input unit, a ranking unit and a user interface unit to execute computer-readable instructions such that the one or more processors are configured to create actual resource data records of considered resources and interactions, each data record comprising of several resource conditions of one resource and an interaction by the resource input unit, the interactions and resource conditions received from at least one data repository,
generate a prioritized interaction list by
- determining, by a machine learning model of the learning apparatus, an actual score value for each considered combination of resource and interaction based on the actual resource data records, and
- ranking, by a ranking unit, the combinations of resource and interaction into an actual sequence according to the actual score values for each combination, and
output the prioritized interaction list by a user interface unit for selecting at least one combination of resource and interaction to apply in the technical system.

The assistance apparatus provides prioritized proposals for interactions according to preferences and working habits. Therefore, only few samples or observations of user interactions are required, which already have big influence on the proposal rules, realized by the machine learning model as already explained before. In the assistance apparatus a learning apparatus is used to determine a score value for actual resource data. Resource data records consisting of combination of resource and an interaction wherein the data records consist of several resource conditions. The number of resource conditions can range from less than ten different conditions up to a hundred conditions. The score values are associated with the observed interactions and ranked according to their value. Strong changes of the machine learning model imply that only few samples, i.e. data records with assigned score values, result in significant changes of the machine learning model. By using a Partial Least Square regression avoids an overfitting.

The learning apparatus can be an integrated component of the assistance apparatus. In another implementation the learning apparatus can be implemented as an external part of the system apparatus. E.g., the learning apparatus can be implemented in a cloud server and the systems apparatus transmits the actual resource data to the learning apparatus in the cloud, which determines score values assigned to the actual resource data processed by the machine learning model and returns them to the assistance apparatus.

The resource condition is retrieved from several data repositories and combined with interactions which depend on at least some of the resource conditions.

According to a further preferred embodiment one or more processors are configured to generate a prioritized interaction list by receiving from the learning apparatus, a training score value for each combination of resource and interaction based on the training resource data records and provide for each combination of resource and interaction, and ranking, by a ranking unit, the combinations of resource and interaction into an actual sequence according to the actual score values for each combination.

The ranked combination provides the prioritized interaction list because the interaction-resource-combination with the highest score value assigned is put on first place of the list followed by the combinations ordered according to descending scores. The evaluation of the score value takes all available resource conditions into account. This would hardly be possible by a human expert. Therefore, the assistance apparatus provides comprehensive guidance for preferred next interactions to be performed with respect to the resource.

According to a further preferred embodiment, the assistance apparatus consisting of one or more processors is configured to generate a prioritized interaction list by receiving, from the resource input unit, actual resource data records of considered resource and interactions via a resource input unit from a data repository and forwarded it to the learning apparatus, determine an actual score value for each combination of resource and interaction based on the actual resource data records in the learning apparatus and ranking, by a ranking unit, the combinations of resource and interaction into an actual sequence according to the actual score value for each combination.

The assistance apparatus therefore provides actual score values depending on the actual resource data record of the actual considered resources and interactions which are collected from data repositories providing updated resource conditions for the various resources. Based on these actual resource data records, an actual prioritized interaction list can be provided via a user interface unit.
A resource manager can therefore evaluate single proposals for combinations of resource and interaction and select a combination according to the individual object. Therefore, no fix filter criteria are applied which do not reflect potential sight or specific cases.

In a preferred embodiment the more processors of the assistance apparatus are configured to receive an indication of at least one selected combination by the user interface unit and generate, by a feedback unit an updated sequence of the combinations by reranking the at least one selected combination according to the highest rank and generate by a feedback unit, updated training data by assigning the actual score value to the data records ordered according to the updated sequence, and transmit the updated training date to the learning apparatus and treat and retrain the machine trained model using the updated training data as additional input.

This allows a feedback to the learning apparatus and a retraining and adaption of the machine learning model to the selected interaction and preferences of a user respectively. Therefore, the user preferences and customs can be used to adapt the machine learning method.

In a preferred embodiment an updated prioritized interaction list is generated using the re-trained machine learning model.

This allows an adaptation of the proposed prioritized interaction list which will be generated based on new available resource data taking into account the re-trained machine learning model.

In a preferred embodiment an updated prioritized interaction list is generated when updated training data is available or when updated resource data are available.

This ensures that an updated prioritized interaction list is always based on the most actual and recent training data and/or resource data.

A third aspect of the invention concerns a method for providing a machine learning model to an assistance apparatus for generating a list of prioritized interactions to apply to a technical system, comprising
- generate, by a first input unit, training data comprising training data records for at least one combination of a resource and an interaction out of a number of available resources and available interactions, a training data record comprising of several resource conditions for the resource and an interaction, and an initial score value assigned to each data record,
- train a machine learning model to evaluate a score for each combination of resource and interaction using the received training data records and a score value assigned to each training data record in a control unit,
- determine by the trained machine learning model a score value for combinations of resource and interaction based on the data records, and
- provide the determined score value for each combination of resource and interaction to the assistance apparatus via an output unit.

A fourth aspect of the invention concerns a method for generating a list for prioritizing interactions to apply to a technical system comprising
- create actual resource data records of considered resources and interactions, each data record comprising of several resource conditions of one resource and an interaction by a resource input unit, the interactions and resource conditions received from at least one data repository from at least one data repository,
- generate a prioritized interaction list by
   - determining, by a machine learning model of the learning apparatus, an actual score value for each combination of resource and interaction based on the actual resource data records, and
   - ranking, by a ranking unit, the combinations of resource and interaction into an actual sequence according to the actual score values for each combination,
- output the prioritized interaction list via a user interface unit for selecting at least one combination of resource and interaction to apply in the technical system.

A fifth aspect of the invention relates to a computer program product comprising a non-repository computer-readable medium that stores a computer executable code that executed on a processor performs the method as described above.

A sixth aspect of the invention concerns a computer-program with program-code-means, which performs al method steps as described above, when the program is performed on a programmable computer and/or a digital signal processor.

The invention will be explained more detailed by reference to the accompanying figures.
- Fig.1: shows a flow diagram to illustrate the inventive method for generation a list of prioritized interactions including a method for providing a machine learning model for generating a list of prioritized interactions;
- Fig.2: shows an example of a training data comprising a data record and an assigned score value in schematic form;
- Fig.3: shows an embodiment of a prioritized interaction list and updated training data resulting from a selected combination and an accordingly updated sequence of combinations;
- Fig.4: shows an embodiment of a learning apparatus in form of a block diagram, and
- Fig.5: shows an embodiment of the inventive assistance apparatus in form of a block diagram.

All functions provided by units of the apparatuses can be a method step of the respective method. In the same way all methods and method steps can be implemented in the apparatuses by corresponding units, which are adapted for performing the respective method steps.

In this document sorting, ordering and ranking are used as synonyms.

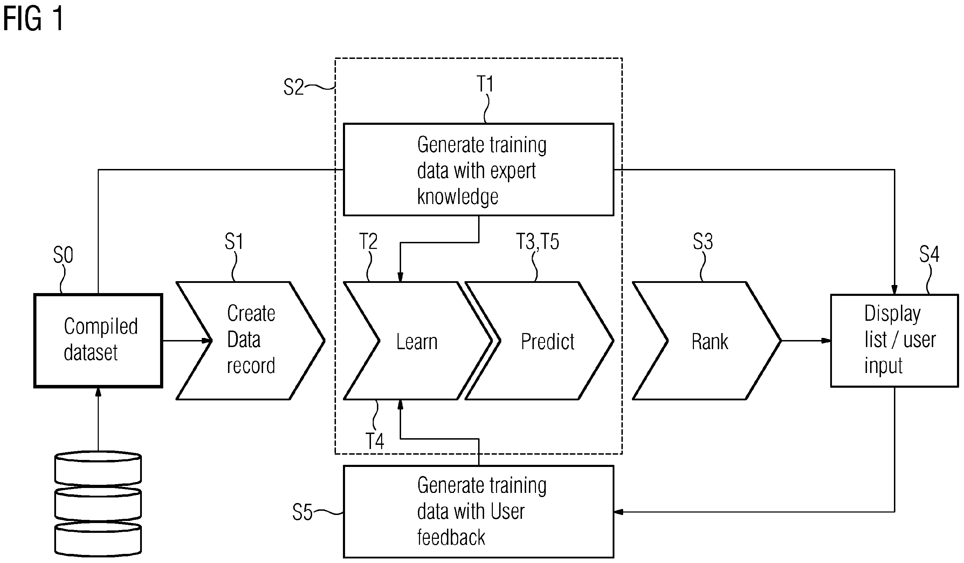

Fig.1 provides an overview of the proposed method to provide prioritized interactions regarding a considered resource which is applied directly or indirectly to a technical system.

The evaluated interactions depend on a number of conditions of a considered resource, which all have to be taken into account in providing a prioritization of the interactions. Additional to the resource conditions a prioritization cannot be based on objective rules alone but requires expert knowledge on the influence of different resource conditions which are active and interrelated. Therefore, an assistance system providing such a prioritization of interactions cannot apply a fix rule. Further on, each interaction which is selected to be performed or which is declined or changed to have a lower priority shall be considered to adopt and optimize the method and, in return, to propose for the next time an accordingly adapted rule. The below described method is implemented in an assistance apparatus, which evaluates for actual resource conditions a prioritized interaction list and provides it via an output unit to a user. The selection of an interaction concerning a dedicated resource is provided as feedback to the assistance apparatus. To determine such a prioritization list of combinations, each combination of an interaction applied to a resource is evaluated by a machine learning method which is trained to evaluate a score for each combination of resource and interaction.

The applied method for providing a machine learning model is shown in Fig.1 in the dash-lined box with reference sign S2. In a first step T1 of the method for providing a machine learning model to an assistance apparatus, training data is generated comprising training data records for at least one combination of resource and an interaction out of a number of available resources and available interactions. A training data record comprises several resource conditions for the resource e.g. characteristics of a device like the device type manufacturing year, time of implementation, software version applied, certificate validation data and so on and the considered interaction.

An initial score value is assigned to each of the data records which indicates the importance or priority of such a combination. The score value is, e.g., a number out of a predefined value range. This score is assigned based on expert knowledge. This assignment of the score can be either performed by a human expert or by a scoring unit, which applies dedicated rules. As a variant the scoring unit implement knowledge extraction methods, like a knowledge graph, to extract knowhow automatically from existing manuals or process descriptions. The generated training data is provided to a machine learning model which is trained to determine a score value for combinations of resource and interaction based on provided data records, see step T2.

The machine learning model comprises several specific scoring functions which determine a score value for each type of interaction depending on the provided resource conditions. The machine learning model comprises is based on a regression function evaluating each combination pointwise and using a partial least square regression of a function.

With a such trained machine learning model actual resource data records of considered resources and interactions can be received and based on these actual resource data actual score values for each combination of resource and interaction are predicted, see especially step T3.

Further on the learning model is re-trained using updated training data which results from a user feedback, see step T4.

To generate a list of prioritized interactions, first of all, see S0, information on the resources has to be compiled and retrieved from data repository, which is often spread on several data bases. In a first step S1 actual resource data records of the considered resources and considered interactions are created based on this collected information. Each data record consists of several resource conditions of the resource and an interaction.

These actual resource data records are input to the machine learning method S2. There, an actual score value is determined for each combination of resource and interaction based on the actual resource data records, see step S2.

In a third step S3, the combinations of resource and interaction are ranked into an actual sequence according to the actual score values for each combination. E.g. the combination with the highest probability evaluated by the machine learning model, is assigned with the highest score value, will be ranked as first priority and is therefore placed on the first position in the prioritized interaction list. The combinations of interaction and resources are ranked according to the order of the actual score values into the prioritized interaction list. Such ordered prioritized interaction list is output via user interface unit for selecting at least one combination of resource and interaction to apply in a technical system, see step S4.

When receiving a user input with respect a selected combination of resource and interaction an updated sequence of the combinations is generated by re-ranking the at least one selected combination according to the highest rank and assigning the actual score values to the data records order according to the updated sequence. This updated training data is delivered to the machine learning model and used to train it, see step S5.

Further user interaction is possible, e.g. by declining a combination of interaction and resource. This declined interaction is e.g. reordered in the updated sequence to the last rank or set to a predefined rank for declined interactions in the prioritized list of interactions.

The training score values for each combination of resource and interaction based on the training resource data records provide already a valuable information so that a ranking of the combinations according to these training score values provides a first valuable prioritized interaction list.

After retraining the machine learning model with updated training data, a prioritized interaction list is recalculated by this retrained machine learning model. Also, if new or updated data records are available a new prioritized interaction list is determined.

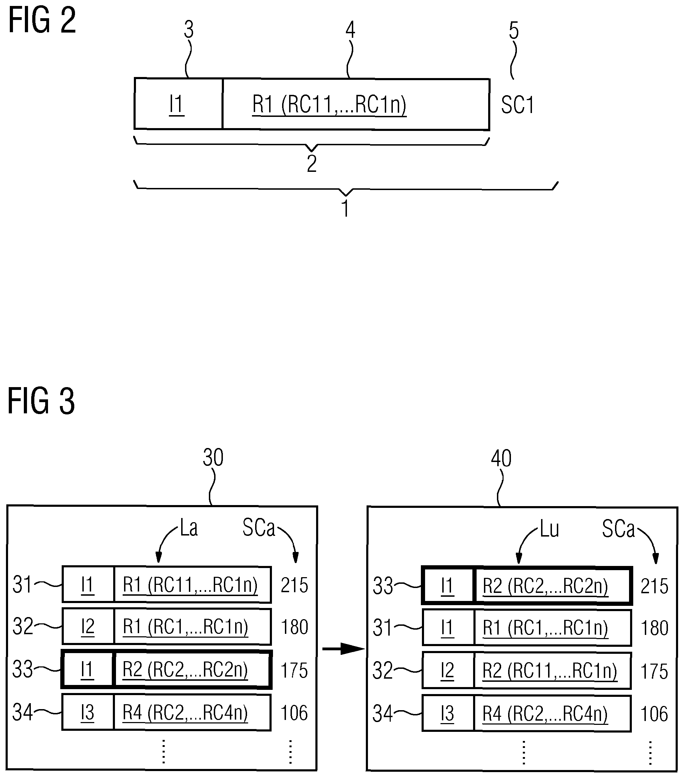

Fig.2 shows an example of one set of training data 1. Training data consists usually on a multitude of training data records, e.g. for each interaction a training data record exists for each combination with a resource. Training data 1 comprises of a score value 5 and a training data record 2, which is also called a feature vector. Each training data record 2 comprises as a first component an interaction 3 and a resource consisting of at least one or usually a multitude of resource conditions 4. The score value 5 is assigned according to expert knowledge and provides a basis for training the machine learning model. For actual data records not each interaction a combination of interaction and resource might exist.

Fig.3 shows an embodiment of a prioritized interaction list generated by an assistance apparatus applying the described machine learning model. The prioritized interaction list 30 shows a first combination of interaction and resource 31, 32, 33, 34 in a first sequence La ordered according to the actual score values as SCa. The combinations are here ordered according to descending values of the actual score value.

As example, combination 33 is selected by a user to be applied in or to the technical system. This information is received in the assistance apparatus. In consequence updated training data is generated by setting the selected combination 33 onto the highest rank, i.e. to the first position in the prioritized interaction list 40. Accordingly, the "not-selected" combinations 31, 32, 34 and so on are ranked one position lower. This provides an updated sequence Lu of the combinations. Updated training data is generated by assigning the actual score values as SCa, as determined before, to the reordered data records now ordered according to the updated sequence Lu. All combinations listed in the prioritized interaction list 40 can now be used as updated training data to re-train the machine learning model in the training apparatus. As an option, only the combination which was selected, is used as updated training data.

In this option, the selected combination has a big influence on the re-trained machine learning model. An overfitting of the machine learning algorithm by such updated training data is minimized by using partially square regression algorithm.

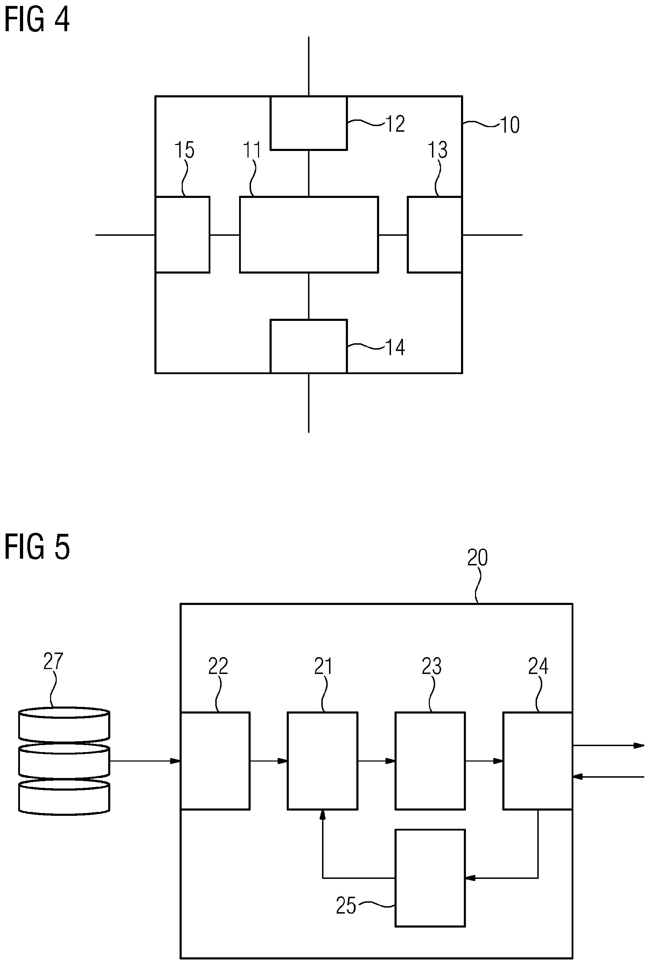

Fig.4 shows a schematic depiction of the learning apparatus 10 by which the learning method is provided. The learning apparatus 10 can be realized by a dedicated hardware establishing a physical object separate of an assistance apparatus. It can also be implemented integrated in the assistance apparatus 20, see Fig. 5 or implemented as part of a server located remote from the assistance apparatus.

The learning apparatus 10 comprises a memory, not shown, storing computer readable instructions and one or more processors configured as a control unit 11, first input unit 12, an output unit 13 and a feedback unit 14.

In context of this application a processor can be a machine or an electronic circuit. The processor can especially be a central processing unit, a microprocessor or micro controller or e.g. an application specific integrated circuit ASIC possibly in combination with a memory unit to store programming constructions. The processor can also be an integrated circuit or a digital signal processor DSP or a field programmable gate array FPGA.

Besides the processors, the first input unit 12, the second input unit 15 and the output unit 13 include components to receive data from an external source and means to transmit data to an external device. The first input unit 12 is configured to generate training data comprising training data records for at least one combination of a resource and an interaction out of a number of available resources and available interactions, a training data record comprising of several resource conditions for the resource and an interaction and an initial score value designed to each training data record. The first input unit 12 is configured to receive the training data either from an external source or by the assistance apparatus 20.

The control unit 11 is configured to train a machine learning model to evaluate a score for each combination of resource and interaction using the received training data records and the score value assigned to each training data record. Further on it is configured to determine, by the trained machine learning model, a score value for each combination of resource and interaction based on the training data records. The output unit 13 of the learning apparatus is configured to provide for each combination of resource and interaction the determined score value to the assistance apparatus. The output unit therefore comprises means to transmit data.

The second input unit 15 is configured to receive actual resource data records of considered resources and interactions from the assistance apparatus. For each combination of resource and interaction the learning apparatus 10 predicts a score value and provides it via the output unit 13 to the assistance apparatus. The second input unit 15 and the output unit 13 therefore can be configured to have an internal or an external interface depending on the implementation of the learning apparatus remote or integrated into the assistance apparatus.

The training score values are different from the initial score values used for training of the machine learning model. The initial score values are assigned to the training data and used to initially train the machine learning model. The training score values are those values the already trained machine learning model determines when receiving the training resource data records as input via the second input unit 15. The resulting predicted scores are the training score values. As the trained machine learning model has built up an internal learning structure, e.g. a decision tree, the evaluated training score values can be different from the initial score values used for training the model.

The feedback unit 14 is configured to receive an updated sequence of the combinations and generate training data by assigning actual score values to the data records according to the updated sequence. The feedback unit 14 is connected to the control unit 11 and provides it with the updated training data. The feedback unit 14 is configured to either provide all combinations of a prioritized interaction list assigned with the score values according to the updated sequence as updated training data to the learning unit 11 or to transfer only the combinations having different rank in the updated sequence compared to the actual sequence as updated training data to the control unit 11.

The control unit 11 is configured to run a regression function especially a pointwise partial at least square regression function.

Fig.5 shows an assistance apparatus 20 comprising of a memory, not depicted, storing computer readable instructions performing the steps of the described method for generating a list of prioritized interactions 30, 40. It comprises one or more processes configured as a learning apparatus 21, a resource input unit 22, a ranking unit 23 and a user interface unit 24. Further on it comprises a feedback unit 25. The units of the assistance apparatus 20 can be implemented similar to the units of the learning apparatus 10 and described in Fig. 4.

The resource input unit 22 is configured to receive actual resource data records of considered resources and interactions especially from at least one data repository 30. The learning apparatus 21 is configured as described for the learning apparatus 10 of Fig. 4. The learning apparatus 21 may optionally include in the feedback unit 14 the function to generate updated training data. In an option this function is implemented in the assistance apparatus in feedback unit 25. The assistance apparatus 20 in Fig. 5 is assumed to create the updated training data by itself.

The learning apparatus 21 provides the actual score values to ranking unit 23. Here the combination of resource and interaction are ranked into an actual sequence La according to the actual score value for each combination. By this ranking the prioritized list is established providing the first ranked combination in the first place and all further combination in a sequence of descending actual score values. In the list, the combination may be marked additionally according to the interaction. Also the combinations might be ordered by interaction.

The prioritized interaction list is transferred to the user interfaces unit 24. The user can indicate via the user interface unit 24 at least one combination of the resource and interaction to be applied in the technical system. The user interface unit 24 may comprise a display module to present the prioritized interaction list to a user and means, like touch sensitive display module or a mouse or keyboard to receive an indication of a selected combination.

The feedback unit 25 is configured to receive an indication of at least selected combination by the user interface 24 and to generate an updated sequence of the combination by re-ranking the at least one selected combination according to the highest rank and generate updated training data by assigning the actual score value to the data records ordered according to the updated sequence.

The feedback unit 25 of the assistance apparatus transmits the updated training data to the learning apparatus 21 where the machine learning model is retrained using the updated training data as additional input.

The assistance apparatus 20 is configured such that an updated prioritized interaction list is generated when updated training data is available and/or when updated resource data are available.

Machine learning methods according to the state of the art commonly define a stringent target figure to optimize its model. Usually such a target figure is a Boolean value, e.g. true or false, a classification, like e.g. stay, sit, run, swim, or a numerical value. For the considered application providing a prioritized list of interactions on resources there exists no complete history and new proposals for combinations cannot be trained by historic data. This problem is solved by using several specific score functions for each type of interaction in combination with resources and specifically the various source conditions determine a score value. Complete order can be reached by ranking the combinations according to the value. The regression model can be trained which unites the rules of the scoring function when a score is used as target figure.

The assistance apparatus can e.g. be applied as a digital companion for a supply chain manager providing prioritized proposals for interactions applied to suppliers as resources.

The scope of protection is given by the claims and not restricted by features discussed and the description as shown in the figures. The invention is not limited to the described examples. The invention also comprises all combinations of any of the described or depicted features.

## Claims

1. Learning apparatus (10) for providing a machine learning model to an assistance apparatus for generating a list of prioritized interactions, comprising
a memory storing computer-readable instructions; and
one or more processors configured as a control unit (11), a first input unit (12) and an output unit (13) to execute the computer-readable instructions such that the one or more processors are configured to
- generate, by the first input unit (12), training data comprising training data records for at least one combination of a resource and an interaction out of a number of available resources and available interactions, a training data record comprising of several resource conditions for the resource and an interaction, and an initial score value assigned to each training data record,
- train a machine learning model to evaluate a score for each combination of resource and interaction using the received training data records and a score value assigned to each training data record in the control unit (11),
- determine by the trained machine learning model a score value for each combination of resource and interaction based on the training data records, and
- provide for each combination of resource and interaction the determined score value to the assistance apparatus (20) via the output unit (13).

2. Learning apparatus according to claim 1,
wherein for each type of interaction a separate instance of machine learning model is trained by training data comprising only combinations of the respective type of interactions and a resource.

3. Learning apparatus according to one of the preceding claims, wherein the one or more processors are configured to
- determine a training score value for each combination of resource and interaction based on the training resource data records and provide the determined training score value for each combination of resource and interaction to the assistance apparatus (20) via the output unit (13).

4. Learning apparatus according to one of the preceding claims, wherein the one or more processors are configured to
- receive actual resource data records of considered resources and interactions via a second input unit (15) from the assistance apparatus (20), and
- determine an actual score value for each combination of resource and interaction based on the actual resource data records.

5. Learning apparatus according to claim 4, wherein the one or more processors are configured to
- receive an updated sequence of the combinations via a feedback unit (14) and generate updated training data by assigning the actual score values to the data records according to the updated sequence,
and
- re-train the machine learning model using the updated training data as additional input.

6. Learning apparatus according to claim 5, wherein only the combinations of a prioritized interaction list having different rank in the updated sequence compared to the actual sequence are used as updated training data.

7. Learning apparatus according to claim 5, wherein all combinations of a prioritized interaction list assigned with score values according to the updated sequence are used as updated training data.

8. Learning apparatus according to one of the preceding claims, wherein the machine learning model is based on a regression function, especially on a pointwise partial least square regression function.

9. Assistance apparatus for generating a list of prioritized interactions to apply to a technical system, comprising a memory storing computer-readable instructions; and
one or more processors configured as a learning apparatus (21) according to claim 1 - 8, a resource input unit (22), a ranking unit (23) and a user interface unit (24) to execute the computer-readable instructions such that the one or more processors are configured to
- create actual resource data records of considered resources and interactions, each data record comprising of several resource conditions of one resource and an interaction by the resource input unit (22), the interactions and resource conditions received from at least one data repository (30),
- generate a prioritized interaction list by
- determining, by a machine learning model of the learning apparatus (21), an actual score value for each considered combination of resource and interaction based on the actual resource data records, and
- ranking, by a ranking unit (23), the combinations of resource and interaction into an actual sequence according to the actual score values for each combination,
- output the prioritized interaction list by a user interface unit (24) for selecting at least one combination of resource and interaction to apply in the technical system.

10. Assistance apparatus according to claim 9, wherein the one or more processors are configured to
generate a prioritized interaction list by
- receive, from the learning apparatus (21), a training score value for each combination of resource and interaction based on the training resource data records and provide for each combination of resource and interaction, and
- ranking, by a ranking unit (23), the combinations of resource and interaction into an actual sequence according to the actual score values for each combination.

11. Assistance apparatus according to any of claims 9 to 10, wherein the one or more processors are configured to generate a prioritized interaction list by
- receiving, from the resource input unit (22), actual resource data records of considered resources and interactions via a resource input unit (22) from a data repository (30) and forward it to the learning apparatus (21),
- determine an actual score value for each combination of resource and interaction based on the actual resource data records, in the learning apparatus (21), and
- ranking, by a ranking unit (23), the combinations of resource and interaction into an actual sequence according to the actual score values for each combination.

12. Assistance apparatus according to any of claims 9 to 11, wherein the one or more processors are configured to
- receive an indication of at least one selected combination by the user interface unit (24) and
- generate, by the feedback unit (25), an updated sequence of the combinations by re-ranking the at least one selected combination according to the highest rank, and
- generate, by the feedback unit (25), updated training data (40) by assigning the actual score values to the data records ordered according to the updated sequence,
and
- transmit the updated training data (40) to the learning apparatus (21) and re-train the machine learning model using the updated training data as additional input.

13. Assistance apparatus according to claim 12, wherein an updated prioritized interaction list is generated using the re-trained machine learning model.

14. Assistance apparatus according to claim 12 to 13, wherein an updated prioritized interaction list is generated when updated training data is available and/or when updated resource data are available.

15. Computer implemented method for providing a machine learning model to an assistance apparatus for generating a list of prioritized interactions to apply to a technical system, comprising
- generate (T1), by a first input unit (12), training data comprising training data records for at least one combination of a resource and an interaction out of a number of available resources and available interactions, a training data record comprising of several resource conditions for the resource and an interaction, and an initial score value assigned to each data record,
- train (T2) a machine learning model to evaluate a score for each combination of resource and interaction using the received training data records and a score value assigned to each training data record in a control unit (11),
- determine (T3) by the trained machine learning model a score value for combinations of resource and interaction based on the data records, and
- provide (T4) the determined score value for each combination of resource and interaction to the assistance apparatus (20) via an output unit (13).

16. Computer implemented method for generating a list of prioritized interactions to apply, comprising
- create (S1) actual resource data records of considered resources and interactions, each data record comprising of several resource conditions of one resource and an interaction by a resource input unit (22), the interactions and resource conditions received from at least one data repository (30) from at least one data repository (30),
- generate a prioritized interaction list by
- determining (S2), by a machine learning model of the learning apparatus, an actual score value for each combination of resource and interaction based on the actual resource data records, and
- ranking (S3), by a ranking unit (23), the combinations of resource and interaction into an actual sequence according to the actual score values for each combination,
- output (S4) the prioritized interaction list via a user interface unit (24) for selecting at least one combination of resource and interaction to apply in the technical system.

17. A computer program product comprising a non-transitory computer readable medium that stores computer executable code that when executed on a processor performs the method as in claim 15 and/or 16.

18. Computer program with program-code-means, which performs all method steps of any of claims 15 and/or 16, when the program is performed on a programmable computer and/or a digital signal processor.
